# EUROPÄISCHE PATENTANMELDUNG

(11) **EP 1 504 984 A1**
(43) Veröffentlichungstag der Anmeldung: **09.02.2005**
(21) Anmeldenummer: 04012233.5
(22) Anmeldetag: 24.05.2004
(51) Int. Cl.: B62D 25/06, B62D 29/04

(54) **Fahrzeuginnenhimmel und Verfahren zum Herstellen eines Fahrzeugdachs**

(30) Priorität: 08.08.2003 DE 10336583
(71) Anmelder: ArvinMeritor GmbH, 63128 Dietzenbach (DE)
(72) Erfinder: Stehning, Kai, 61250 Usingen (DE); Böhm, Horst, 60599 Frankfurt (DE)
(74) Vertreter: Kitzhofer, Thomas, Dipl.-Ing.

(57) **Zusammenfassung**

Ein Fahrzeuginnenhimmel hat auf seiner Außenseite singuläre Befestigungsvorsprünge (9), mittels denen er an der Dachaußenhaut (2) befestigt wird.

## Beschreibung

Die Erfindung betrifft einen Fahrzeuginnenhimmel, mit einer dem Fahrzeuginneren zugewandten Innenseite und einer der Dachaußenhaut zugewandten Außenseite.

Fahrzeuginnenhimmel verkleiden die Fahrzeugdachhaut, die üblicherweise aus Blech oder Kunststoff besteht, zum Fahrzeuginneren hin. Ein Fahrzeuginnenhimmel sollte nicht übermäßig vibrieren und auch andere Bauteile wie Beleuchtung, Staufächer, Sonnenblenden und dergleichen aufnehmen, weshalb er großflächig auf der Innenseite der Dachaußenhaut verklebt wird. Dies schafft zwar eine gute Verbindung, im Reparaturfall ist der Innenhimmel jedoch sehr schwer austauschbar.

Aus der DE 100 19 199 C2 ist ein Fahrzeuginnenhimmel bekannt, der zur Verbesserung seiner Austauschbarkeit mit einer sogenannten Lochrasterfolie versehen ist.

Die Erfindung schafft einen Fahrzeuginnenhimmel, der kostengünstig herstellbar und ebenfalls sehr leicht austauschbar ist.

Dies wird bei einem Fahrzeuginnenhimmel der eingangs genannten Art dadurch erreicht, daß auf der Außenseite singuläre Befestigungsvorsprünge ausgebildet sind, mittels denen der Innenhimmel am Dach befestigt ist.

Der erfindungsgemäße Innenhimmel ist also nicht vollflächig an der Dachaußenhaut befestigt, sondern hat spezielle, singuläre Befestigungsvorsprünge, die der Befestigung und gleichzeitig der Beabstandung des restlichen Teils des Innenhimmels von der Außenhaut dienen. Durch die Anzahl, Lage und Auflagefläche der Befestigungspunkte an der Außenhaut läßt sich der Innenhimmel reproduzierbar gemäß den jeweiligen Anforderungen und Gegebenheiten an der Dachaußenhaut befestigen und auch wieder leicht entfernen.

Der Innenhimmel ist vorzugsweise ein mehrschichtiges Verbundbauteil, wobei in der außenseitigen Schicht die Befestigungsvorsprünge ausgeformt sind, das heißt, die außenseitige Schicht bildet die Befestigungsvorsprünge aus.

Die außenseitige Schicht ist insbesondere eine Schaumstoffschicht, durch die sich die Befestigungsvorsprünge einfach herstellen lassen. Hierzu werden im Schäumwerkzeug Vertiefungen erzeugt, die zwischen sich die Vorsprünge begrenzen. Die Befestigungsvorsprünge können sehr individuell der Einbausituation angepaßt werden, beispielsweise bezüglich Tiefe, Durchmesser oder Geometrie.

Die Befestigungspunkte sind darüber hinaus vorzugsweise sowohl randnah als auch mittig angeordnet.

Die Erfindung betrifft darüber hinaus ein Verfahren zum Herstellen eines Fahrzeugdachs, mit einer Dachaußenhaut und einem innenseitig daran befestigbaren Innenhimmel gemäß der Erfindung. Der Innenhimmel wird an der Außenfläche der Befestigungsvorsprünge an der Dachhaut befestigt, insbesondere durch Kleben. Hier ist vorgesehen, daß der Innenhimmel nur über die dazu bestimmten Befestigungsvorsprünge mit der Dachhaut verklebt wird. Die Außenränder können darüber hinaus selbstverständlich, wie bislang, über Keder geklemmt werden.

Es müssen nicht sämtliche Vorsprünge auf der Außenseite des Innenhimmels als Befestigungsvorsprünge ausgeführt sein. Es könnten zum Beispiel auch Positioniervorsprünge vorgesehen sein, die an der Dachaußenhaut anliegen und über die der Innenhimmel horizontal und/oder vertikal zur Dachaußenhaut positioniert wird. Hierbei sind mehrere Varianten denkbar. Beispielsweise können die Vorsprünge als Anschläge oder Abstandshalter wirken, die nicht mit der Dachaußenhaut verklebt sind. Eine andere Ausführungsform sieht vor, daß innenseitig auf der Außenhaut wenigstens eine Geometrie ausgebildet ist, die einen seitlichen Anschlag für den Positioniervorsprung bildet. Dies kann eine Art Montagehilfe darstellen, über die eine schnelle Ausrichtung des Innenhimmels zur Dachaußenhaut möglich wird.

Die Erfindung betrifft schließlich ein durch das erfindungsgemäße Verfahren hergestelltes Fahrzeugdach, insbesondere ein Fahrzeugdachmodul.

Bezüglich der Ausführungsform, bei der ein oder mehrere Vorsprünge als Positioniervorsprünge ausgebildet sind, kann beispielsweise ein innenseitiger Verstärkungsholm der Dachaußenhaut als Anschlag für den Positioniervorsprung dienen. Der ohnehin vorgesehene Verstärkungsholm hat damit eine zusätzliche Funktion erlangt.

Weitere Merkmale und Vorteile ergeben sich aus der nachfolgenden Beschreibung und aus den nachfolgenden Zeichnungen, auf die Bezug genommen wird. In den Zeichnungen zeigen:
- Figur 1 eine Draufsicht auf einen erfindungsgemäßen Fahrzeuginnenhimmel und
- Figur 2 eine Querschnittsansicht durch ein erfindungsgemäß hergestelltes Fahrzeugdach nach der Erfindung mit dem Innenhimmel nach Figur 1.

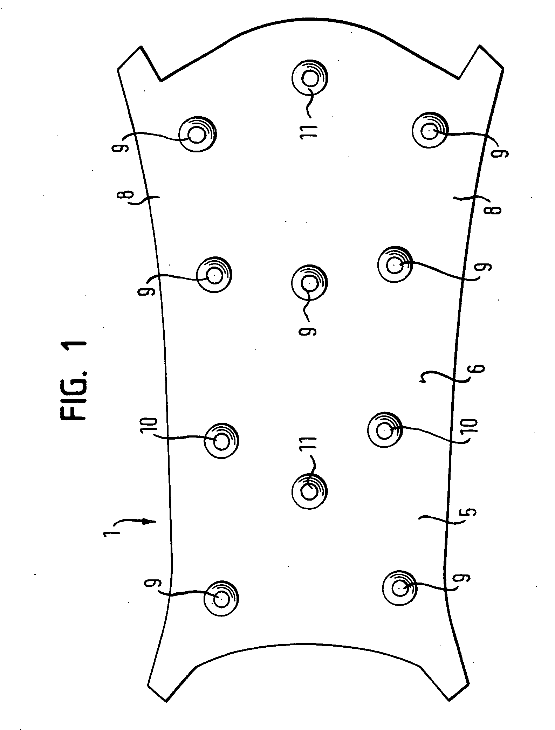

In Figur 1 ist ein Fahrzeuginnenhimmel 1 dargestellt, der durch ein mehrschichtiges Verbundbauteil gebildet ist.

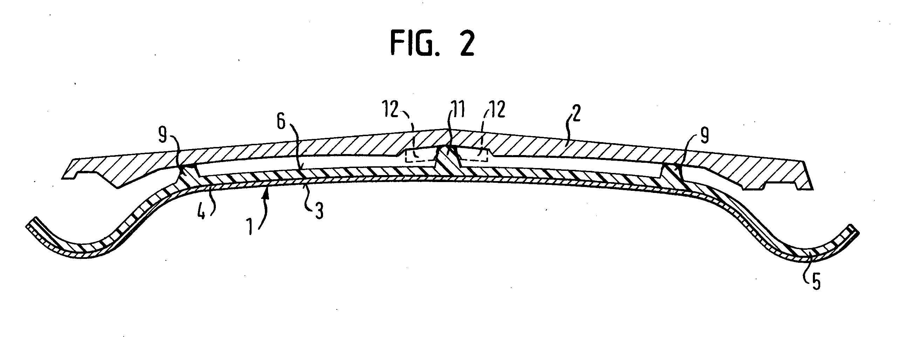

In Figur 2 ist der Einbauzustand des Innenhimmels 1 zu erkennen. Figur 2 zeigt ein komplettes Fahrzeugdach. Dargestellt ist sogar ein sogenanntes Dachmodul, welches am Dachrahmen (nicht gezeigt) befestigt wird. Das Fahrzeugdach oder das Dachmodul besteht aus einer Dachaußenhaut 2 aus Glas, Metall oder Kunststoff und dem Innenhimmel 1.

Das Verbundbauteil hat eine dem Fahrzeuginneren zugewandte Innenseite 3, die durch eine Folie oder ein Textil 4 gebildet ist, welches rückseitig hinterschäumt wird, um eine Schaumstoffschicht 5 zu bilden. Die der Dachaußenhaut 2 zugewandte Seite des Innenhimmels 1 wird als Außenseite 6 bezeichnet.

Die in Figur 1 zu sehende Außenseite 6 wird vollständig durch die Schaumstoffschicht 5 gebildet, die sowohl im Bereich der Randabschnitte 8 als auch der Mitte zahlreiche domförmige, nach oben ragende, singuläre Befestigungsvorsprünge 9 besitzt. Die Befestigungsvorsprünge 9 sind in der Schaumstoffschicht 5 ausgeformt, d.h. einstückiger Bestandteil der Schaumstoffschicht 5.

Der Innenhimmel 1 ist mit der Dachaußenhaut 2 über die Befestigungsvorsprünge 9 verbunden, und zwar nur über die Befestigungsvorsprünge 9. Diese werden mit ihrer der Dachaußenhaut 2 zugewandten Stirnseite innen an der Dachaußenhaut 2 verklebt.

Einige der auf der Außenseite 6 vorgesehenen, in der Schaumstoffschicht 5 ausgeformten Vorsprünge können auch Positionieraufgaben besitzen. Diese Vorsprünge werden als Positioniervorsprünge 10, 11 bezeichnet. Die Positioniervorsprünge 10 beispielsweise sind in ihrer Geometrie identisch zu den Befestigungsvorsprüngen 9, sie sind jedoch nicht mit der Dachaußenhaut 2 verklebt, sondern dienen als Anschläge oder Abstandshalter, denn sie liegen an der Dachaußenhaut 2 an.

Die Positioniervorsprünge 11 dienen nicht nur der vertikalen Positionierung des Innenhimmels 1, sondern auch der horizontalen, das heißt seitlichen Positionierung des Innenhimmels 1 zur Dachaußenhaut 2. Die Dachaußenhaut 2, die hierbei vorzugsweise aus Metall ist, hat innenseitig einen Verstärkungsholm 12 aus umgeformtem Blech, der in Figur 2 mit unterbrochenen Linien dargestellt ist, um sein optionales Vorhandensein anzudeuten. Der Verstärkungsholm 12 besitzt Löcher, die einen Öffnungsquerschnitt besitzen, der dem Außenquerschnitt der in sie eindringenden Positioniervorsprünge 11 entspricht. Zwischen dem Rand der Löcher und dem zugeordneten Positioniervorsprung 11 ist maximal ein kleines Spiel vorhanden, vorzugsweise ist eine leichte Preßpassung vorgesehen. Bei der Montage des Innenhimmels 1 werden die Vorsprünge, die der Befestigung dienen, mit Klebstoff bestrichen. Beim Ansetzen des Fahrzeughimmels 1 dringen die konisch zulaufenden Positioniervorsprünge 11 in die entsprechend konisch gestalteten Löcher im Verstärkungsholm 12 ein, so daß eine einfache und sichere Positionierung des Innenhimmels 1 zur Dachaußenhaut 2 möglich ist. Dies ist insbesondere im Reparaturfall sehr vorteilhaft. Natürlich können auch Positioniervorsprünge 10, 11 gleichzeitig als Befestigungsvorsprünge 9 ausgeführt sein, wenn die oberen Stirnflächen ebenfalls an der Dachaußenhaut 2 befestigt werden.

Zu betonen ist auch, daß die Dachaußenhaut 2 nicht zwingend einen Verstärkungsholm 12 oder Öffnungen für die Positioniervorsprünge 10, 11 haben muß. Auch andere Geometrien, die als Anschläge in vertikaler und/oder horizontaler Richtung wirken, können selbstverständlich vorgesehen sein.

Im Reparaturfall ergibt sich dadurch ein leichteres, vollständigeres Lösen des Innenhimmels 1 von der Dachaußenhaut und ein leichteres Befestigen des neuen Innenhimmels 1.

### Bezugszeichenliste

- 1: Innenhimmel
- 2: Dachaußenhaut
- 3: Innenseite
- 4: Textil
- 5: Schaumstoffschicht
- 6: Außenseite
- 8: Randabschnitte
- 9: Befestigungsvorsprünge
- 10, 11: Positioniervorsprünge
- 12: Verstärkungsholm

## Patentansprüche

1. Fahrzeuginnenhimmel, mit einer dem Fahrzeuginneren zugewandten Innenseite (3) und einer der Dachaußenhaut (2) zugewandten Außenseite (6),
**dadurch gekennzeichnet, daß**
auf der Außenseite (6) singuläre Befestigungsvorsprünge (9) ausgebildet sind, mittels denen der Innenhimmel (1) an der Dachaußenhaut (2) befestigt ist.

2. Fahrzeuginnenhimmel nach Anspruch 1, **dadurch gekennzeichnet, daß** er ein mehrschichtiges Verbundbauteil ist, wobei in der außenseitigen Schicht die Befestigungsvorsprünge (9) ausgeformt sind.

3. Fahrzeuginnenhimmel nach Anspruch 1 oder 2, **dadurch gekennzeichnet, daß** die außenseitige Schicht eine Schaumstoffschicht (5) ist.

4. Fahrzeuginnenhimmel nach einem der vorhergehenden Ansprüche, **dadurch gekennzeichnet, daß** sowohl randnahe als auch mittige Befestigungsvorsprünge (9) vorgesehen sind.

5. Fahrzeuginnenhimmel nach einem der vorhergehenden Ansprüche, **dadurch gekennzeichnet, dass** die Befestigungsvorsprünge (9) domförmig ausgebildet sind.

6. Verfahren zum Herstellen eines Fahrzeugdachs, mit einer Dachaußenhaut (2) und einem innenseitig daran befestigten Fahrzeuginnenhimmel (1) nach einem der vorhergehenden Ansprüche, **dadurch gekennzeichnet, daß** der Fahrzeuginnenhimmel (1) an der Außenfläche der Befestigungsvorsprünge (9) mit der Dachaußenhaut (2) verbunden wird.

7. Verfahren nach Anspruch 6, **dadurch gekennzeichnet, daß** die Befestigungsvorsprünge (9) mit der Dachhaut (2) verklebt werden.

8. Verfahren nach Anspruch 6 oder 7, **dadurch gekennzeichnet, daß** der Fahrzeuginnenhimmel (1) nur über die Befestigungsvorsprünge (9) mit der Dachaußenhaut (2) verklebt wird.

9. Verfahren nach einem der vorhergehenden Ansprüche, **dadurch gekennzeichnet, daß** Dachaußenhaut (2) und Fahrzeuginnenhimmel (1) ein Dachmodul bilden.

10. Verfahren nach einem der vorhergehenden Ansprüche, **dadurch gekennzeichnet, daß** auf der Außenseite (6) des Innenhimmels (1) Positioniervorsprünge (10, 11) ausgebildet sind, die an der Dachaußenhaut (2) anliegen und über die der Innenhimmel (1) horizontal und/oder vertikal zur Dachaußenhaut (2) positioniert wird.

11. Verfahren nach Anspruch 10, **dadurch gekennzeichnet, daß** an der Innenseite der Dachaußenhaut (2) wenigstens eine Geometrie ausgebildet ist, die als seitlicher Anschlag für einen Positioniervorsprung (11) bei der Befestigung des Dachinnenhimmels (1) an der Dachaußenhaut (2) dient.

12. Fahrzeugdach, hergestellt nach dem Verfahren gemäß einem der Ansprüche 6 bis 11.

13. Fahrzeugdach nach Anspruch 12, **dadurch gekennzeichnet, daß** die Dachaußenhaut (2) innenseitig einen Verstärkungsholm (12) hat, an dem ein Positioniervorsprung (11), der an der Außenseite (6) des Innenhimmels (1) angeformt ist, angrenzt.
